Europäisches Patentamt

(19) European Patent Office

Office européen des brevets

(11) Veröffentlichungsnummer: **0 131 095**
**B1**

(12) **EUROPÄISCHE PATENTSCHRIFT**

(45) Veröffentlichungstag der Patentschrift:
19.03.86

(51) Int. Cl.⁴: **B 01 D 13/00, C 02 F 1/44**

(21) Anmeldenummer: 84104046.2

(22) Anmeldetag: 11.04.84

(54) Vorrichtung zum Filtern und Trennen von flüssigen und gasförmigen Medien.

(30) Priorität: 13.05.83 DE 3317517

(43) Veröffentlichungstag der Anmeldung:
16.01.85 Patentblatt 85/3

(45) Bekanntmachung des Hinweises auf die Patenterteilung:
19.03.86 Patentblatt 86/12

(84) Benannte Vertragsstaaten:
DE FR GB IT NL SE

(56) Entgegenhaltungen:
EP - A - 0 031 725
EP - A - 0 055 839
DE - A - 3 028 398
DE - C - 2 945 317
US - A - 3 984 319
US - A - 4 046 685

(73) Patentinhaber: GKSS-Forschungszentrum Geesthacht
GmbH, Max-Planck-Strasse, D-2054 Geesthacht (DE)

(72) Erfinder: Timm, Hans, Osterheese 6, D-2054 Geesthacht
(DE)
Erfinder: Griesbach, Heinz, Brunnenweg 5,
D-2054 Geesthacht (DE)

(74) Vertreter: Schöning, Hans-Werner, Dipl.-Ing.,
RECHTSANWÄLTE Dr. Harmsen, Dr. Utescher
Dipl.-Chem Harmsen, Bartholatus Dr. Schaeffer, Dr.
Fricke PATENTANWÄLTE Dr. Siewers, Dipl.-Ing.
Schöning Adenauerallee 28, D-2000 Hamburg 1 (DE)

LIBER, STOCKHOLM 1986

**Beschreibung**

Die Erfindung betrifft eine Vorrichtung zum Filtern und Trennen von flüssigen und gasförmigen Medien, insbesondere zur Wasserentsalzung und Wasserreinigung durch Umkehrosmose und Ultrafiltration mit einer Mehrzahl von in einem Außengehäuse hintereinander angeordneten, beidendig offenen und mit einem Deckel verschlossenen trogförmigen Innengehäusen, die jeweils eine Mehrzahl von flachliegend aufeinandergestapelten Membrankissen mit zwischen ihnen liegenden punktförmig wirkenden Abstandshaltern enthalten, wobei das über die Trogquerschnitte zuströmende Medium die Kissenaußenflächen überströmt und das an den Membraninnenflächen anfallende Medium über die Membrankissenstapel durchsetzende Bohrungen und in diesen Bohrungen angeordneten rohrförmigen Bolzen zu einem sich in Längsrichtung im Außengehäuse erstreckenden Auslaßrohr strömt.

Vorgenannte Vorrichtungen zum Filtern und Trennen sind beispielsweise bekannt aus der DE-C-29 45 317 der Anmelderin.

Die vorbekannten Vorrichtungen zum Filtern und Trennen der vorgenannten Art zeigen häufig bei Änderungen der Durchströmgeschwindigkeiten und insbesondere beim anfänglichen Einschalten einer Anlage ein unerwünschtes Betriebsverhalten in Form von Druckwellen, Druckstössen und Stauerscheinungen, die nach jetziger Erkenntnis der Erfinder im wesentlichen auf die in der Vorrichtung zuströmseitig vorhandene Laminarität der Strömung zurückzuführen ist.

Aufgabe der Erfindung ist es, die vorerwähnten Nachteile zu beseitigen.

Zur Lösung der vorgenannten Aufgabe wird erfindungsgemäß vorgeschlagen, die benachbarten in Reihe geschalteten Innengehäuse nicht mehr untereinander zu verbinden und jedes einzelne Innengehäuse allein über seinen rohrförmigen Bolzen an dem gemeinsamen Auslaßrohr anzuschliessen. Durch diese Maßnahme wird der sonst beim festen Verbinden der Innengehäuse entstehende stabile Strömungsmittelpfad unterbrochen, so daß zwangsläufig eine gewisse Turbulenz auftritt. Von besonderem Vorteil ist es, wenn gemäß einem weiteren Merkmal der Erfindung die Länge der Membranstapel in Strömungsrichtung kleiner ist als die axiale Ausdehnung der sie aufnehmenden Innengehäuse. Auf diese Weise kann auch zwischen zwei benachbarten trogförmigen Innengehäusen ein turbulenzerzeugender Spalt entstehen.

Weitere Merkmale der Erfindung ergeben sich aus den Unteransprüchen.

In der nachfolgenden Beschreibung wird anhand der beigefügten Zeichnung ein bevorzugtes Ausführungsbeispiel der Erfindung näher erläutert.

In den Zeichnungen zeigen:

Fig. 1 einen axialen Schnitt durch eine erfindungsgemäße Vorrichtung zum Filtern und Trennen von flüssigen und gasförmigen Medien,

Fig. 2 einen Querschnitt gemäß der Schnittlinie II-II der Fig. 1 in vergrößertem Maßstabe,

Fig. 3 eine von links gesehene Stirnansicht zu Fig. 1,

Fig. 4 eine Draufsicht auf einen zwischen den Membrankissen angeordneten Abstandsring,

Fig. 5 einen Schnitt gemäß der Schnittlinie V-V der Fig. 4 und

Fig. 6 einen vergrößerten Teilschnitt zu Fig. 2.

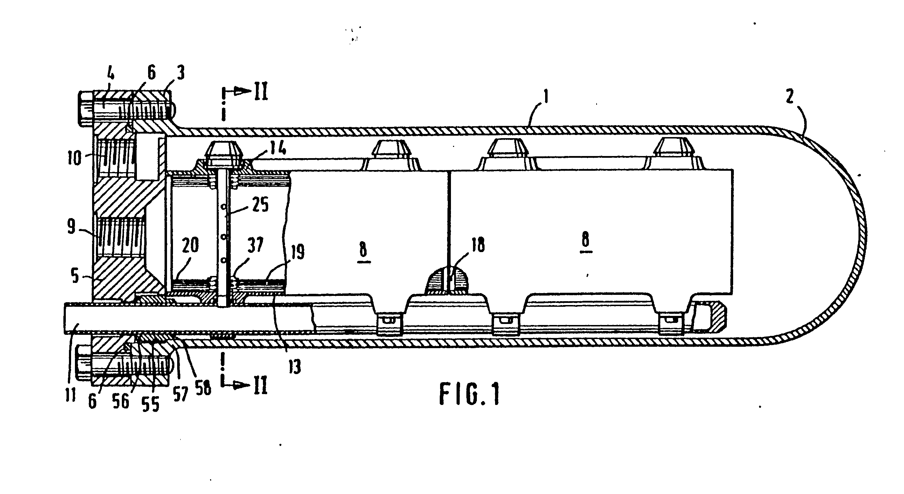

Die in Fig. 1 in einem Axialschnitt dargestellte erfindungsgemässe Vorrichtung besteht aus einem rohrförmigen Außengehäuse 1, welches an einem Ende mit einem kuppelförmigen Boden 2 verschlossen ist. Am freien Ende des Außengehäuses 1 befindet sich ein Ringflansch 3, für den mit Schraubbolzen 4 zu befestigenden Deckel 5, in dem sich der Rohwassereinlaßanschluß 10, der Soleauslaßanschluß 9 und die Austrittsöffnung für das Permeatauslaßrohr 11 befindet. Da sich die Anschlüsse 9 und 10 bezüglich der Darstellung der Fig. 1 auf gleichem Niveau befinden, wurde der Rohwassereinlaß 10 in der Fig. 1 um 90° versetzt eingezeichnet. Zwischen Deckel 5 und Außengehäuse 1 befindet sich eine Ringdichtung 6.

Im Inneren des Außengehäuses 1 befinden sich kassettenartig ausgebildete Innengehäuse 8, die jeweils Stapel von Membrankissen 19 enthalten.

Jedes dieser Innengehäuse 8 besteht aus einem trogartigen Unterteil 13, welches an der Oberseite mit einem flachen Deckel 14 verschlossen werden kann. Das Innengehäuse 8 ist stirnseitig geöffnet und bildet somit einen kastenförmigen Durchflußquerschnitt. Die einzelnen Innengehäuse 8 sind nicht unmittelbar miteinander verbunden, sondern werden jedes Innengehäuse für sich von dem Permeatauslaßrohr 11 getragen.

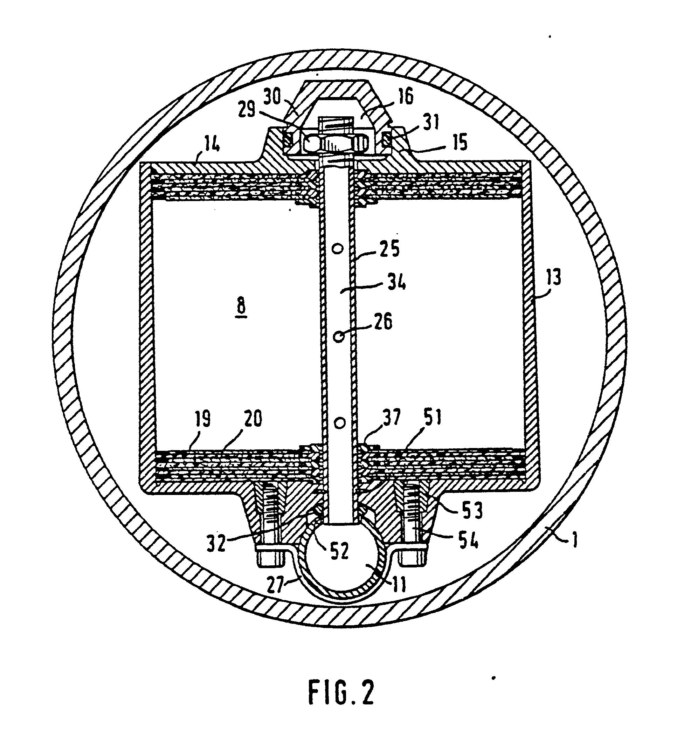

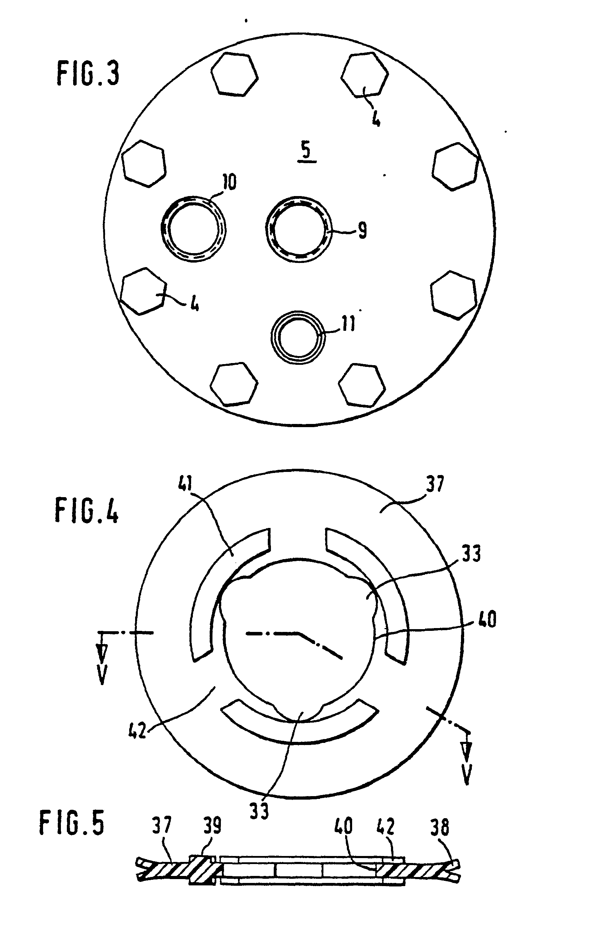

Der Innenraum des durch den Deckel 14 begrenzten Unterteiles 13 wird vollständig vom Stapel der Membrankissen 19 und der zwischenliegenden Abstandshalter 20 ausgefüllt. Jedes einzelne Membrankissen besteht vorzugsweise aus fünf Schichten, nämlich zwei äußeren Membranschichten, zwei jeweils darunter liegenden aus Netzgewebe bestehenden Drainageschichten und einer mittig angeordneten Trennschicht. Diese fünf Schichten sind am Rande dichtend miteinander verbunden. Vorzugsweise bestehen die fünf Schichten aus schweißtechnisch gut miteinander kompatiblen Materialen, insbesondere aus verwandten Kunststoffen, Z B. aus Polyester - Polypropylen- oder Polysulfonbasis, die sich in fünf Lagen aufeinanderliegend durch Ultraschall verschweißen lassen. Jedes einzelne Membrankissen 19 enthält zwei Mittelöffnungen 35, genauso wie für jeden Abstandshalter 20 zwei Mittelöffnungen 36 vorgesehen sind, um die Bauelemente 19 und 20 auf zwei rohrförmigen Mittelbolzen 25 stapeln zu können. Diese Mittelbolzen 25 sind mit einem Widerlagering 51 fest im Gehäuseunterteil 13 verankert, damit sie als Spannvorrichtung dienen können. Wie die Fig. 2 zeigt, kann auf das obere freie Ende des rohrförmigen Bolzens 25 eine Mutter 29 aufgeschraubt werden, um den Deckel 14 in Richtung auf das Gehäuseunterteil 13 vorzubewegen und die zwischenliegenden Membranen zusammenzuspannen. Diese Zusammenspannung ohne Beschädigung der Membranen ist möglich durch die Verwendung von Stützringen 37, die ebenfalls den rohrförmigen Mittelbolzen 25 umgeben und in den Mittelöffnungen 36 der Abstandshalter 20 ruhen. Wie die Fig. 4 und 5 zeigen, haben die Stützringe 37 obere und untere Ringteile 39, die aus mehreren Segmenten 41 bestehen. Die maximale Dicke des Stützringes 37 deckt sich mit der

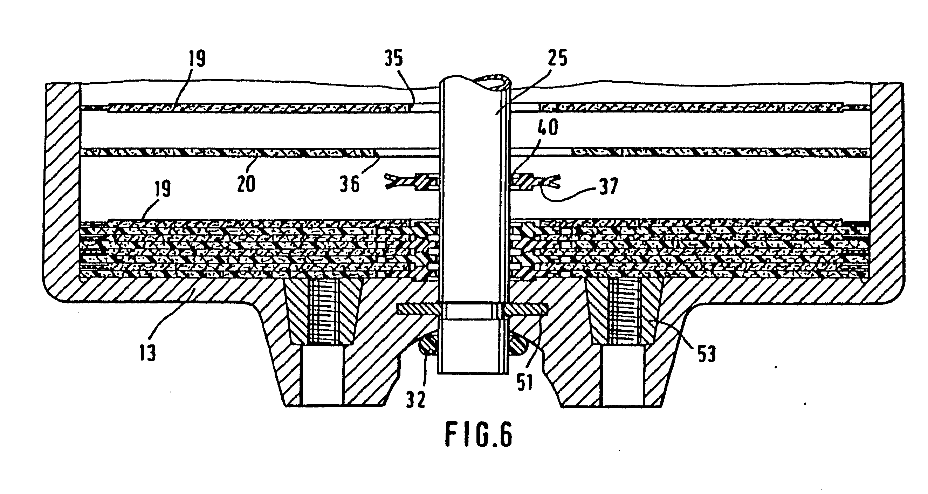

Dickenabmessung von Membrankissen 19 + Abstandshalter 20. Es kann also die Mutter 29 (Fig. 2) fest angezogen werden, bis die Ringteile 39 der Stützringe 37 fest aufeinander liegen. In diesem Zustand sorgt die gespreizte Lippendichtung 38 für ein dichtendes Anliegen an einander zugewandten Membranschichten zweier benachbarter Membrankissen, die, wie Fig. 6 deutlich erkennen läßt, näher an den rohrförmigen Mittelbolzen 25 heranreichen, als die Abstandshalter 20. Die Mittelöffnung 40 des Stützringes 37 weicht von der Kreisform ab. Die Innenöffnung des Stützringes 37 ist zwar so ausgebildet, daß dieser eng am rohrförmigen Mittelbolzen 25 anliegen kann, daß aber drei über den Umfang verteilte radiale Aufweitungen 33 entstehen, so daß das innerhalb der einzelnen Membrankissen in Richtung Mittelbolzen 25 strömende Permeat über die Durchlässe 42 zwischen den Segmenten 41 und die radialen Aufweitungen 33 die Außenfläche des Mittelbolzens 25 erreichen kann, um dann letztlich in die Radialbohrungen 26 des mit Axialbohrung 34 versehenen Bolzens 25 eintreten zu können.

Wie Fig. 2 zeigt, trägt der Deckel 14 des Innengehäuses einen ringförmigen Kragen 15, in den eine Abdeckkappe 30 eingesteckt und mit einer Ringdichtung 31 abgedichtet werden kann. Der rohrförmige Mittelbolzen 25 ist am oberen Ende ebenfalls geöffnet. Von der Außenseite des Rohres 25 kann über Kanäle im Deckel 14 das Permeat sternförmig diese obere Öffnung im Mittelbolzen erreichen. Diese Strömungsmittelverbindung hat den Zweck, eine sonst im Inneren 16 der Abdeckkappe 30 mögliche Kontaminerung oder Anlagerung von Keimen zu verhindern.

Das untere Ende des rohrförmigen Mittelbolzens 25 trägt einen zusätzlich als Abstandshalter dienenden Dichtungsring 32. Die Konfiguration und Dimensionierung des Gehäusebodens 13 ist so vorgenommen, daß sich das untere freie Ende des rohrförmigen Mittelbolzens 25 in eine entsprechende Radialbohrung 52 des Permeatabfuhrrohres 11 einsetzen läßt. An zwei gegenüberliegenden Seiten des Mittelbolzens 25 befinden sich im Gehäuseboden 13 zwei Gewindemuttern 53, in welche sich Schraubbolzen 54 hineindrehen lassen, die zur Befestigung jeweils einer Lasche 27 dienen. Bei vollständig angezogenen Schraubbolzen 54 sitzt das Innengehäuse 8 bündig auf dem Permeatauslaßrohr 11 und es ist dabei die Ringdichtung 32 so stark komprimiert, daß es an der Übergangsstelle von Rohr 25 und Rohr 11 zu einem dichtenden Abschluß kommt.

Wie die Fig. 1 zeigt, sind die kassettenartigen Innengehäuse 8 mit den Laschen 27 so auf dem Rohr 11 befestigt, daß sie bündig nebeneinander zu liegen kommen und auch das in Fig. 1 am weitestens links liegende Innengehäuse 8 bündig an der Innenseite des Deckels vor dem Soleauslaß 9 zur Anlage kommen kann.

Die einzelnen Membrankissen haben vorzugsweise eine rechteckige Gestalt bei einer Länge, die vorzugsweise hält jedes einzelne Membrankissen und jeder einzelne Abstandshalter zwei Bohrungen 35 bzw. 36. Diese Bohrungen sind so angeordnet, daß praktisch für jedes einzelne Strömungsmittelpartikel, welches von außen in das Innere des Kissens eingedrungen ist, im Mittel ein gleichlanger Strömungsmittelweg bis zum rohrförmigen Mittelbolzen 25 besteht. Wenn also das Format eines Membrankissens a x 2a ist, haben die Mittelbohrungen der Kissen voneinander einen Abstand, der gleich a ist und einen Randabstand von jeweils a/2.

Bei einer Versuchsanlage wurden beispielsweise in einem Innengehäuse von 200 x 100 x 100 mm 45 Membrankissen 19 und 46 zwischenliegende Abstandshalter 20 angeordnet. Hieraus ergibt sich eine werksame Fläche von fast 2m². 

Im Betrieb wird im Falle einer Wasserentsalzung das salzhaltige Rohwasser am Anschluß 10 zugeführt. Von dort strömt das Rohwasser innerhalb des Außengehäuses 1 außerhalb der kassettenartigen Innengehäuse 8 bis zum Boden 2 des Außengehäuses, um dann von dort in entgegengesetzter Richtung den Innenquerschnitt der an ihren beiden gegenüberliegenden Enden offenen trogförmigen Innengehäuse 8 zu durchströmen. Dabei strömt das Rohwasser über alle Außenseiten der Membranflächen der einzelnen Membrankissen. Das nicht durch die Membranen hindurchgehende Rohwasser kann stark angereichert als Sole am Auslaß 9 wieder austreten. Das in die einzelnen Membrankissen eingetretene entsalzte Wasser strömt im inneren jedes einzelnen Kissens über die radialen Kanäle des Abstützringes 37 und die Radialbohrungen 26 in die rohrförmigen Bolzen 25 hinein um letztlich das Permeatauslaßrohr 11 zu erreichen.

Eine besonders einfache Montage der erfindungsgemässen Vorrichtung ist möglich, wenn auf das Permeatauslaßrohr 11 ein ringförmiger Dichtungsträger 55 fest aufgesetzt wird. Dieser Dichtungsträger trägt die Ringdichtung 56 und sorgt für den ordnungsgemässen axialen Abstand der einzelnen Bauelemente der Vorrichtung. Im eingebauten Zustand liegt die Ringdichtung 56 bündig am Deckel 5 und am Rohr 11 an. Rückseitig beaufschlagt eine Stufenfläche 58 des Dichtungsträgers eine entsprechende komplementär ausgebildete Stufe 57 im Außengehäuse 1.

Bei abgenommenen Deckel 5 kann man das Permeatauslaßrohr 11 mit allen auf ihm befestigten Innengehäusen 8 herausziehen, um dann je nach Erfordernis einzelne oder alle Innengehäuse auszutauschen oder mit neuen Membranstapeln zu versehen. Da die Innengehäuse 8 untereinander unverbunden sind, genügt es, jeweils die Schraubbolzen 54 zu lösen und die Innengehäuse 8 von dem Permeatauslaßrohr 11 abzuziehen. Die durch die Innenbohrung 52 definierten Montagestellen der Innengehäuse 8 sind so gewählt, daß bei festem Eingriff der Widerlager 57/58 das am weitesten links liegende Innengehäuse 8 bündig an der Innenseite des Deckels 5 zur Anlage kommt, so daß Rohwassereinlaß 10 und Soleauslaß 9 voneinander getrennt sind.

Die vorstehende Beschreibung nahm im wesentlichen Bezug auf die Wasserentsalzung durch Umkehrosmose. Auf diese Anwendung ist der Anmeldungsgegenstand jedoch nicht beschränkt, denn die erfindungsgemässe Vorrichtung ist generell zum Filtern und Trennen von beliebigen flüssigen und gasförmigen Medien durch Umkehrosmose und Ultrafiltration geeignet.

Von besonderer Bedeutung für die vorliegende Erfindung ist es, daß vor allem bei höheren Drücken und höheren Strömungsgeschwindigkeiten alles vermieden wird, was zu einer ausgesprochen laminaren Durchströmung führen kann. Eine solche besonders ausgeprägte Laminarität kann zu einer Zerstörung der Membranstapel,zu Druckstössen und selbst zu einer Umkehr der beabsichtigten physikalischen Vorgänge führen. In diesem Zusammenhang bringt die erfindungsgemässe Maßnahme, die einzelnen Innengehäuse 8 nicht miteinander zu verbinden, sondern einzeln lösbar auf dem Permeatauslaßrohr 11 zu befestigen, nicht nur montagemässige Vorteile, sondern auch strömungstechnische, da zwischen den einzelnen Kassetten eine Strömungsstörung auftreten kann. In diesem Zusammenhang bringt es erfindungsgemäß auch noch einen besonderen Vorteil, wenn man die axiale Länge der einzelnen Membrankissen geringer macht als die axiale Länge der Innengehäuse 8, so daß zwischen benachbarten Innengehäusen ein flächiger Spalt 18 entsteht, der turbulenzerzeugend ist.

**Patentansprüche**

1.Vorrichtung zum Filtern und,Trennen von flüssigen und gasförmigen Medien, insbesondere zur Wasserentsalzung und Wasserreinigung durch Umkehrosmose und Ultrafiltration mit einer Mehrzahl von in einem Außengehäuse (1) hinter einander angeordneten, beidendig offenen und mit einem Deckel (14) verschlossenen trogförmigen Innengehäusen (8) die.jeweils eine Mehrzahl von flachliegend aufeinander gestapelten Membrankissen (19) mit zwischen ihnen liegenden punktförmig wirkenden Abstandshaltern (20) enthalten, wobei das über die offenen Trogquerschnitte zuströmende Medium die Kissenaußenflächen überströmt und das an den Membraninnenflächen anfallende Medium über die Membrankissenstapel durchsetzende Bohrungen (35) und in diesen Bohrungen angeordneten rohrförmigen Bolzen (25) zu einem sich in Längsrichtung im Außengehäuse erstreckenden Auslaßrohr (11) strömt, dadurch gekennzeichnet, daß die Innengehäuse (8) unverbunden nebeneinander angeordnet sind und jedes einzelne Innengehäuse (8) für sich allein am Auslaßrohr (11) befestigt ist.

2. Vorrichtung nach Anspruch 1 dadurch gekennzeichnet, daß die die Stapel von Membrankissen (19) durchsetzenden rohrförmigen Bolzen (25) unter Zwischenschaltung von abstandshaltenden Dichtungen (32) unmittelbar in das Auslaßrohr (11) eingesteckt sind.

3. Vorrichtung nach Anspruch 1 und 2 dadurch gekennzeichnet, daß am Boden (13) der Innengehäuse (8) angeschraubte Laschen (27) das Auslaßrohr (11) kraft- und/ oder formschlüssig umfassen.

4. Vorrichtung nach Anspruch 1 bis 3 dadurch gekennzeichnet, daß die axiale Länge der Membranstapel (19) in Strömungsrichtung kleiner als die axiale Länge der sie aufnehmenden Innengehäuse (8) ist, um zwischen zwei benachbarten Innengehäusen (8) einen turbulenzerzeugenden Spalt (18) zu bilden

5. Vorrichtung nach Anspruch 1 bis 4 dadurch gekennzeichnet, daß die Membrankissen (19) mit innerhalb der Abstandshalter (20) angeordneten Abstandsringen (37) zwischen Deckel (14) und Boden (13) eingespannt sind, wobei diese Abstandsringe (37) an ihrem inneren, den rohrförmigen Bolzen (25) umgebenden Umfang radiale Aufweitungen (33) aufweisen und im rohrförmigen Bolzen (25) nach innenführende Radialbohrungen (26) vorgesehen sind.

6. Vorrichtung nach Anspruch 1 bis 5 dadurch gekennzeichnet, daß die Membrankissen (19) eine quadratische oder rechteckige Form haben und daß die mittig angeordneten Kissenbohrungen (35) mit einem Abstand a angeordnet sind und einen Randabstand a/2 haben, wenn die Kissenfläche das Format a x n · a hat, bei einem ganzzahligen Wert von n, der vorzugsweise 2 beträgt.

7. Vorrichtung nach Anspruch 1 bis 6 dadurch gekennzeichnet) daß alle Spannelemente (29) von Innengehäuse (8) und Membrankissen (19) so ⁓angeordnet sind, daß sie von den zum Auslaßrohr (11) strömenden Medium umspült werden, um die Anlagerung von Keimen zu verhindern.

8. Vorrichtung nach Anspruch 1 bis 7 dadurch gekennzeichnet, daß die Membrankissen von einer mittleren Trennfolie, zwei dort benachbart anliegenden Netzgewebeschichten und zwei die Netzgewebeschichten von außen bedeckenden Membranfolien gebildet werden und daß alle fünf Schichten flächengleich aufeinanderliegend mit Ultraschall randverschweißt sind.

9. Vorrichtung nach Anspruch 1 bis 8 dadurch gekennzeichnet, daß alle Membrankissen aus chemisch verwandten Kunststoffen, z. B. auf Polyester-, Polypropylen- oder Polysulfonbasis bestehen.

**Claims:**

1. Apparatus for filtering and separating liquid and gaseous media, particularly for the desalination of water and water purification by reverse osmosis and ultrafiltration, having a plurality of trough-shaped internal housings (8) which are disposed in series in an external housing (1), are open at both ends and are closed by a cover (14), and each of which contains a plurality of membrane cushions (19) lying flat and stacked one on top of the other with spacers (20), acting at points, situated between them, wherein the medium flowing in through the open cross-sections of the troughs flows over the outer surfaces of the cushions and the medium collecting on the inner surfaces of the membranes flows through bores (35) penetrating through the stack of membrane cushions and tubular pins (25) disposed in these bores to an outlet pipe (11) extending in the longitudinal direction in the external housing, characterised in that the internal housings (8) are disposed side by side without being connected and that each individual internal housing (8) is secured separately to the outlet pipe (11).

2. Apparatus according to claim 1, characterised in that the tubular pins (25) penetrating through the stack of membrane cushions (19) are inserted directly in the outlet pipe (11) with the interposition of spacing seals (32).

3. Apparatus according to claims 1 and 2, characterised in that straps (27) screwed onto the bottom (13) of the internal housing (8) embrace the outlet pipe (11) frictionally and/or positively.

4. Apparatus according to claims 1 to 3, characterised in that the axial length of the membrane stack (19) is shorter, in the direction of flow, than the axial length of the internal housing (8) receiving it, in order to form a turbulence-producing gap (18) between two adjacent internal housings (8).

5. Apparatus according to claims 1 to 4, characterised in that the membrane cushions (19) are gripped between cover (14) and bottom (13) by spacing rings (37) disposed inside the spacers (20), these spacing rings (37) comprising radial bulges (33) at their inner periphery surrounding the tubular pins (25) and radial bores (26) leading inwards being provided in the tubular pins (25).

6. Apparatus according to claims 1 to 5, characterised in that the membrane cushions (19) have a square or rectangular shape and that the centrally disposed cushion bores (35) are arranged with a spacing a and have an edge spacing a/2 if the cushion surface has the format $a \times n \cdot a$, with an integral value of n, which is preferably 2.

7. Apparatus according to claims 1 to 6, characterised in that all the tightening elements (29) of the internal housings (8) and membrane cushions are disposed so that they are flowed round by the medium flowing to the outlet pipe (11) in order to prevent the accumulation of germs.

8. Apparatus according to claims 1 to 7, characterised in that the membrane cushions are formed from a central separating foil, two layers of net fabric adjacent thereto and two layers of membrane sheeting covering the layers of net fabric from the outside and that all five layers, lying one on top of the other with equal areas, are welded together at the edges by ultrasonics.

9. Apparatus according to claims 1 to 8, characterised in that all the membrane cushions consist of chemically related plastics materials, for example on a polyester, polypropylene or polysulphonic basis.

**Revendications**

1. Dispositif pour filtrer et séparer des matières liquides et gazeuses, notamment pour le dessalement d'eau et l'épuration d'eau par osmose inverse et ultrafiltration, comportant plusieurs carters intérieurs (8) en forme d'augets disposes l'un derrière l'autre dans un carter exterieur (4), ouverts aux deux extrémités, fermes au moyen d'un couvercle (14) et qui contiennent chacun plusieurs coussins à membranes (19) empilés à plat l'un sur l'autre et entre lesquels sont disposés des organes de maintien d'espacement (20), le fluide arrivant par l'intermédiaire des sections d'augets balayant les surfaces extérieures des coussins tandis que le fluide arrivant sur les surfaces interieures des membranes s'écoule par l'intermédiaire de trous (35) traversant la pile de coussins à membranes et par l'intermédiaire de broches (25) de forme tubulaire disposées dans ces trous pour arriver dans un tube de décharge (11) s'étendant dans la direction longitudinale du carter extérieur, caractérisé en ce que les carters intérieurs (8) sont disposés l'un à côte de l'autre sans être liés entre eux et chaque carter intérieur individuel (8) est fixé séparément sur le tube de décharge (11).

2. Dispositif selon la revendication 1, caractérisé en ce que les broches de forme tubulaire (25) traversant la pile de coussins à membranes (19) sont engagées directement dans le tube de décharge (11) avec interposition de joints d'étanchéité (32) de maintien d'espacement.

3. Dispositif selon la revendication 1 ou 2, caractérisé en ce que des éclisses (27) boulonnées sur le fond 13 du carter intérieur (8) entourent le tube de décharge (11) avec conjugaison de forces et/ou de formes.

4. Dispositif selon les revendications 1 à 3, caractérisé en ce que la longueur axiale de la pile de membranes (19) dans la direction d'écoulement est plus petite que la longueur axiale des carters intérieurs (8) les recevant, pour former entre deux carters intérieurs adjacents (8) un intervalle générateur de turbulence (18).

5. Dispositif selon les revendications 1 à 4, caractérisé en ce que les coussins à membranes (19) sont bloqués entre le couvercle (14) et le fond (13) au moyen d'anneaux d'espacement (37) disposes à l'intérieur des organes de maintien d'espacement (20), lesdits anneaux d'espacement (37) comportant, sur leur périphérie intérieure entourant la broche de forme tubulaire (25), des élargissements radiaux (33) et des trous radiaux (26) débouchant à l'intérieur étant ménagés dans la broche de forme tubulaire (25).

6. Dispositif selon les revendications 1 à 5 caractérisé en ce que les coussins à membranes (19) ont une forme carrée ou rectangulaire et en ce que les trous (35) ménagés au milieu des coussins sont disposés avec un espacement a et ont un espacement entre bords de a/2, lorsque la surface des coussins a le format a x n · a, dans le cas d'une valeur entière de n qui est de préférence égale à 2.

7. Dispositif selon les revendications 1 à 6, caractérisé en ce que tous les éléments de fixation (29) des carters intérieurs (8) et des coussins à membranes (19) sont disposés de telle sorte qu'ils soient balayés par le fluide s'écoulant en direction du tube de décharge (11) pour empêcher le dépôt de bactéries.

8. Dispositif selon les revendications 1 à 7 caractérisé en ce que les coussins à membranes sont constitués par une feuille séparatrice centrale, deux feuilles de tissu réticulé placées dans des zones adjacentes et deux feuillesmembranes recouvrant extérieurement les couches de tissu réticulé, et en ce que la totalité des cinq couches sont soudées l'une contre l'autre, à plat et sur leurs bords, par ultrasons.

9. Dispositif selon les revendications 1 à 8, caractérisé en ce que tous les coussins à membranes sont constitues de matière plastique chimiquement appropriée, par exemple à base de polyester, de polypropylène ou de polysulfone.

FIG.1

FIG.2

FIG.3

5

10

4

9

4

11

FIG.4

41

37

33

40

42

33

FIG.5

37  39    40  42  38

FIG.6

0 131 095